# EUROPÄISCHE PATENTSCHRIFT

(11) **EP 2 279 094 B1**
(45) Veröffentlichungstag und Bekanntmachung des Hinweises auf die Patenterteilung: **11.06.2014**
(21) Anmeldenummer: 09735834.5
(22) Anmeldetag: 17.04.2009
(51) Int. Cl.: B29D 99/00, B29L 31/58, B29C 70/02, B60N 2/56, B60N 2/70

(54) **VERFAHREN ZUR HERSTELLUNG EINES POLSTERELEMENTS**
METHOD FOR PRODUCING A CUSHION ELEMENT
PROCÉDÉ DE FABRICATION D'UN ÉLÉMENT DE REMBOURRAGE

(30) Priorität: 22.04.2008 DE 102008020288; 31.07.2008 DE 102008035622
(43) Veröffentlichungstag der Anmeldung: 02.02.2011
(73) Patentinhaber: Johnson Controls GmbH, 51399 Burscheid (DE)
(72) Erfinder: KOEPPE, Matthias, 52428 Jülich (DE); WERRN, Martin, 58135 Hagen (DE); KLUSMEIER, Werner, 32312 Lübbecke (DE); WEINGÄRTNER, Andreas, 32351 Stemwede (DE)
(74) Vertreter: Schwöbel, Thilo K.
(86) Internationale Anmeldenummer: PCT/EP2009/002817
(87) Internationale Veröffentlichungsnummer: WO 2009/129964

(56) Entgegenhaltungen:
- DE-A1- 2 241 574
- DE-A1- 3 237 025
- DE-A1- 4 136 891
- DE-A1- 19 719 532
- DE-U- 1 687 695

## Beschreibung

Die Erfindung betrifft ein Verfahren zur Herstellung eines Polsterelements, insbesondere ein Sitzpolsterelement zur Verwendung in einem Kraftfahrzeug.

Ein ähnlicher Gegenstand ist beispielsweise in den Dokumenten DE 16 87 695 U und DE 22 41 574 A1 offenbart. Polster für Fahrzeugsitze aus einem reinen Faser-/Latexaufbau haben materialbedingt bei einem angemessenen Sitzkomfort eine hohe bleibende Setzung. Erst mit steigender Härte / Raumgewicht verbessert sich die bleibende Setzung, jedoch auf Kosten des Sitzkomforts. Flächige Einleger aus beispielsweise PU-Schaum oder Flockenverbundschaum könnten das Problem lösen, verschlechtern jedoch die Atmungsaktivität des Gesamtaufbaus. Einleger erhöhen auch den fertigungstechnischen Aufwand, weil zusätzliche Halbzeuge notwendig werden. Aus der deutschen Offenlegungsschrift DE 3237025 A1 ist ein mit einem Füllmaterial gefüllten Bauelement bekannt, während aus der deutschen Patentschrift DE 4136891 B4 ein Verfahren zur Herstellung von Gummihaarpolstem mit Anteilen von Schaumstoff bekannt ist. Hierbei wird jedoch in einem ersten Herstellungsschritt ein Rohvlies erzeugt und in einem zweiten Herstellungsschritt ein Bindemittel zugegeben, was zu einem vergleichsweise teueren und unflexiblen Herstellungsverfahren führt.

Die genannten Nachteile zu vermeiden ist Aufgabe der vorliegenden Erfindung.

Erfindungsgemäß wird die Aufgabe mittels eines Verfahrens zur Herstellung eines Polsterelements gemäß den Merkmalen des Anspruchs 1 gelöst. Hierdurch ist es erfindungsgemäß in vorteilhafter Weise möglich, zum einen ein hochqualitatives Polsterelement zu erzeugen, welches insbesondere eine geringe bleibende Setzung aufweist, und zum anderen eine große Flexibilität während des Herstellungsverfahrens zu gewährleisten, so dass das erfindungsgemäße Polsterelement sowohl kostengünstig hergestellt werden kann als auch flexibel an die geplante Nutzung angepasst werden kann.

Erfindungsgemäß ist es besonders bevorzugt, dass die Fasern und die Schaumteilchen sowie deren Verhältnis in Abhängigkeit des Orts innerhalb eines Formwerkzeugs zur Herstellung des Polsterelements zugefügt werden, insbesondere dass die Fasern und die Schaumteilchen sowie deren Verhältnis in Abhängigkeit des Orts entlang einer zur Oberfläche des späteren Polsterelements im wesentlichen senkrechten Richtung und/oder in Abhängigkeit des Orts entlang einer zur Oberfläche des späteren Polsterelements im wesentlichen parallelen Richtung innerhalb des Formwerkzeugs zugefügt werden. Hierdurch ist es erfindungsgemäß in vorteilhafter Weise möglich, das Polsterelement in bestimmten Zonen oder in bestimmten Tiefenschichten weicher oder härter zu gestalten, so dass mit einem einzigen Herstellungs- bzw. Formungsschritt ein optimal an den vorgesehenen Anwendungszweck angepasstes Polsterelement herstellbar ist.

Erfindungsgemäß wird der Ort der Fasern und/oder der Schaumteilchen während des Hinzufügens zur Bildung des Vorläufermaterials mittels elektrostatischer Aufladung beeinflusst. Hierdurch kann die Bewegung der Schaumteilchen und/oder der Fasern während des Streuprozesses bzw. während des Aufbaus des Vorläufermaterials zur Bildung des Polsterelements gezielt beeinflusst werden, so dass beispielsweise das Wegfliegen von Schaumteilichen und/oder Fasern (von Orten, an denen die Schaumteilchen vorliegen sollten) vermieden werden kann bzw. bestimmte Raumbereiche von Schaumteilichen und/oder Fasern freibleiben.

Weiterhin ist erfindungsgemäß bevorzugt, wenn das Bindemittel ein Latexwerkstoff ist und wenn nach der Formung des Polsterelements im Formwerkzeug ein Vulkanisationsschritt erfolgt bzw. wenn als Schaumteilchen flockenförmige und/oder kugelförmige Schaumteilchen mit dem Bindemittel dem Vorläufermaterial zugefügt werden. Hierdurch ist es in besonders einfacher und kostengünstiger Weise möglich, das Polsterelement besonders atmungsaktiv und komfortabel zu gestalten.

Ein weiterer, nicht erfindungsgemäßer Gegenstand betrifft ein Polsterelement hergestellt nach einem erfindungsgemäßen Verfahren, wobei das Polsterelement mit einem Bindemittel verbundene Fasern und Schaumteilchen aufweist bzw. wobei die Fasern und die Schaumteilchen sowie deren Verhältnis in Abhängigkeit des Orts entlang einer zur Oberfläche des Polsterelements im wesentlichen senkrechten Richtung und/oder in Abhängigkeit des Orts entlang einer zur Oberfläche des Polsterelements im wesentlichen parallelen Richtung innerhalb des Polsterelements angeordnet sind. Hierdurch ist es in vorteilhafter Weise möglich, das Polsterelement in bestimmten Zonen oder in bestimmten Tiefenschichten weicher oder härter zu gestalten, so dass mit einem einzigen Herstellungs- bzw. Formungsschritt ein optimal an den vorgesehenen Anwendungszweck angepasstes Polsterelement herstellbar ist.

Hinsichtlich der Form der Schaumteilchen ist es bevorzugt, dass diese im wesentlichen rund ist, wobei insbesondere die Schaumteilichen zumindest teilweise als flexible Hohlkugeln vorgesehen sind, bzw. dass die Form der Schaumteilchen im wesentlichen einer Reißform bzw. einer Schredderform entspricht. Es können auch Mischformen bzw. unterschiedliche bzw. unterschiedlich geformte Schaumteilchen an unterschiedlichen Orten des Polsterelements angeordnet sein.

Ein weiterer, nicht erfindungsgemäßer Gegenstand betrifft einen Fahrzeugsitz, insbesondere für ein Kraftfahrzeug, umfassend ein Sitzteil und ein Lehnenteil, wobei das Sitzteil und/oder das Lehnenteil ein Polsterelement aufweist.

Ausführungsformen der Erfindung sind in der Zeichnung dargestellt und in der nachfolgenden Beschreibung näher erläutert.
Figur 1 zeigt schematisch einen Fahrzeugsitz mit einem Sitzteil und einem Lehnenteil in Seitenansicht.
Figur 2 zeigt schematisch ein Polsterelement eines Fahrzeugsitzes, insbesondere entweder des Sitzteils oder des Lehnenteils, in einer schematischen Schnittdarstellung.
Figur 3 zeigt schematisch eine weitere Darstellung eines Polsterelements eines Fahrzeugsitzes.

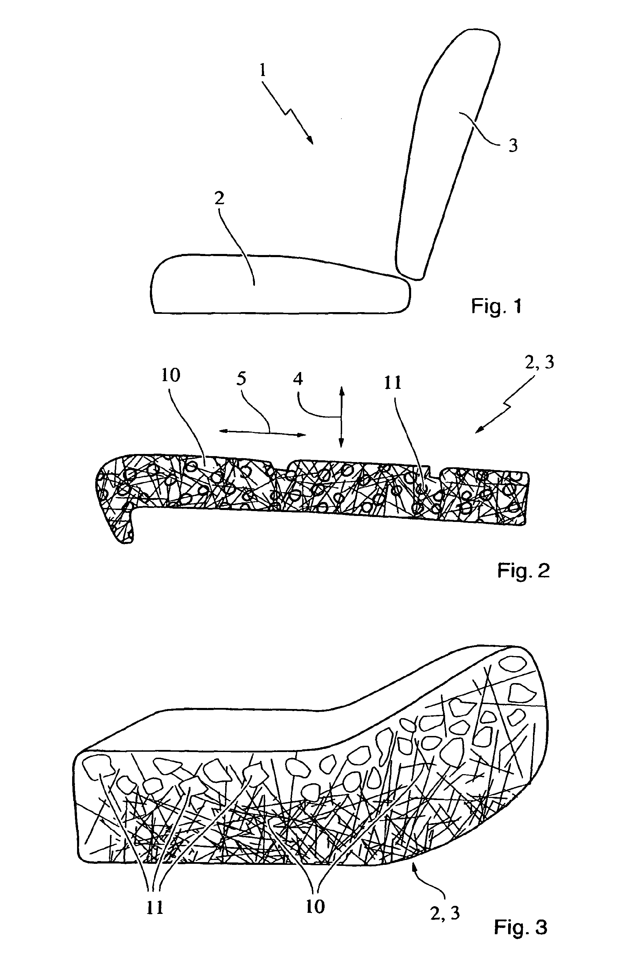

Die Figur 1 zeigt schematisch einen gattungsgemässen Fahrzeugsitz 1 in der Seitenansicht und Figur 2 stellt beispielhaft und schematisch einen Schnitt durch ein Polster bzw. ein Polsterelement 2 für ein Sitzteil bzw. ein Polster bzw. ein Polsterelement 3 für ein Lehnenteil des Fahrzeugsitzes dar.

Zur Herstellung eines Polsterelements 2, 3 ist es vorgesehen, dass Fasern 10 mit einem Bindemittel versehen werden und direkt durch einen Streukopf in Vorform-Aufnahmen bzw. in Werkzeuge gestreut werden, so dass keine Notwendigkeit besteht, beispielsweise Flore oder vorgefertigte Vliese etwa aus Fasermaterialien zu verwenden.

Erfindungsgemäß ist es vorgesehen bzw. es wird die eingangs angegebene Aufgabe erfindungsgemäss dadurch gelöst, dass während des Streuprozesses eines Polsters elastische flocken- oder kugelförmige Schaumteilchen 11 wie zum Beispiel Schaumflocken oder Schaumhohlkugeln oder andere geeignete Teilchen mit in den Faserverbund eingestreut werden. Diese befinden sich nachher zwischen den Fasern 10 um so ein Kollabieren der Fasern 10 und damit eine bleibende Setzung zu vermeiden bzw. zu vermindern. Das Verhältnis von Schaumteilchen 11 und Fasern 10 kann während des Streuprozesses gesteuert werden, so dass beispielsweise die (Schaum-)Partikel partiell vermehrt in hochbelastete Zonen wie z. B im Bereich des Sitzhöckers eingebracht werden können. Hierdurch kann in vorteilhafter Weise eine veränderte Zusammensetzung des zur Herstellung des Polsterelements 2, 3 gebildeten Vorläufermaterials gezielt sowohl in einer auf die Oberfläche des fertigen Polsterelements 2, 3 im wesentlichen senkrechte Richtung 4 als auch in einer auf die Oberfläche des fertigen Polsterelements 2, 3 im wesentlichen parallel Richtung 5 vorgenommen werden. Hierdurch wird beispielsweise die Dicke des Vorläufermaterials, die Zusammensetzung des Vorläufermaterials und/oder das Verhältnis von Schaumteilchen 11 und Fasern 10 im Vorläufermaterial verändert.

In einer besonders bevorzugten Ausführung wird aus Gründen der Nachhaltigkeit ein Latexschaum verwendet, aber es können auch alle anderen Arten von flexiblen Materialien eingesetzt werden.

Die Form der Schaumteilchen 11 kann variieren. In einer bevorzugten Ausführung sind sie gerissen oder geschreddert, in einer weiteren besonders bevorzugten Ausführung ist die Form als flexible Hohlkugel aus beispielsweise Latex ausgeführt, die den strömungstechnischen Vorteil mitbringt, sich nicht auszurichten.

Der Vorteil der partiellen Schaumteilchen 11 im Vergleich zum flächigen Schaumeinleger besteht darin, mit den Fasern 10 nur punktuelle Verbindungen über das flüssige Latex auszubilden, so dass die Atmungsaktivität der Bauteile erhalten bleibt. Über den Materialmix, d.h. insbesondere mittels einer Variation des Bindemittels - insbesondere der Latexart - und/oder einer Variation der Fasern und/oder der Schaumteilchen, lässt sich die Härte und damit der Sitzkomfort einstellen.

Während des Streu- oder Legeprozesses werden automatisch die zusätzlichen Schaumteilchen 11 in das Faser-Latexgemisch eingebracht, hierzu sind die verschiedensten Fördertechniken geeignet. Um ein Wegfliegen der Schaumteilchen 11 zu verhindern, werden erfindungsgemäß sie mittels statischer Aufladung an Ihrem Platz gehalten. Auch ist es auf diese Weise möglich (d.h. etwa durch elektrostatische Abstoßung), bestimmte Bereiche von Schaumteilchen komplett oder zumindest im wesentlichen freizuhalten.

Die mit den Fasern 10 und den Schaumteilchen 11 eingebrachte Nasslatexmischung, oder ein anderer Matrixwerkstoff, verbindet die Fasern 10 mit den Schaumteilchen 11 dauerhaft punktuell und flexibel. Nach der Vulkanisation bildet sich ein heterogenes, poröses und hochflexibles Bauteil mit einem hohen Sitzkomfort aus. Die Luftdurchlässigkeit ist hervorragend und damit ergibt sich eine passive Klimatisierungsmöglichkeit für Sitze.

### Bezugszeichenliste

- 1: Fahrzeugsitz
- 2: Sitzteil / Polsterelement des Sitzteils
- 3: Lehnenteil / Polsterelement des Lehnenteils
- 4: Richtung im wesentlichen senkrecht zur Oberfläche des Polsterelements
- 5: Richtung im wesentlichen parallel zur Oberfläche des Polsterelements
- 10: Faser
- 11: Schaumteilchen

## Patentansprüche

1. Verfahren zur Herstellung eines Polsterelements (2, 3) zur Verwendung in einem Kraftfahrzeug, wobei Fasern (10) und Schaumteilchen (11) mit einem Bindemittel verbunden werden, **dadurch gekennzeichnet, dass** zur Erzeugung eines Vorläufermaterials des Polsterelements (2, 3) die Fasern (10) und die Schaumteilchen (11) unabhängig voneinander zusammen mit dem Bindemittel dem Vorläufermaterial zugefügt werden, wobei der Ort der Fasern (10) und/oder der Schaumteilchen (11) während des Hinzufügens zur Bildung des Vorläufermaterials mittels elektrostatischer Aufladung beeinflusst wird.

2. Verfahren nach Anspruch 1, **dadurch gekennzeichnet, dass** die Fasern (10) und die Schaumteilchen (11) sowie deren Verhältnis in Abhängigkeit des Orts innerhalb eines Formwerkzeugs zur Herstellung des Polsterelements (2, 3) zugefügt werden.

3. Verfahren nach einem der vorhergehenden Ansprüche, **dadurch gekennzeichnet, dass** die Fasern (10) und die Schaumteilchen (11) sowie deren Verhältnis in Abhängigkeit des Orts entlang einer zur Oberfläche des späteren Polsterelements (2, 3) im wesentlichen senkrechten Richtung (4) und/oder in Abhängigkeit des Orts entlang einer zur Oberfläche des späteren Polsterelements (2, 3) im wesentlichen parallelen Richtung (5) innerhalb des Formwerkzeugs zugefügt werden.

4. Verfahren nach einem der vorhergehenden Ansprüche, **dadurch gekennzeichnet, dass** das Bindemittel ein Latexwerkstoff ist und dass nach der Formung des Polsterelements im Formwerkzeug ein Vulkanisationsschritt erfolgt.

5. Verfahren nach einem der vorhergehenden Ansprüche, **dadurch gekennzeichnet, dass** als Schaumteilchen (11) flockenförmige und/oder kugelförmige Schaumteilchen (11) mit dem Bindemittel dem Vorläufermaterial zugefügt werden.

## Claims

1. Method for manufacturing a cushion element (2, 3) for use in a motor vehicle, wherein fibres (10) and foam particles (11) are combined with a bonding agent, **characterised in that**, for production of a precursor material of the cushion element (2, 3), the fibres (10) and the foam particles (11) are added to the precursor material independent of one another together with the bonding agent, wherein the location of the fibres (10) and/or the foam particles (11) is influenced during formation of the precursor material by means of electrostatic charging.

2. Method in accordance with claim 1, **characterised in that** the fibres (10) and the foam particles (11) as well as their ratio as a function of the location are supplied for manufacture of the cushion element (2,3) within a forming tool.

3. Method in accordance with one of the preceding claims, **characterised in that** the fibres (10) and the foam particles (11) as well as their ratio as a function of the location are supplied along a direction essentially perpendicular (4) to the surface of the subsequent cushion element (2, 3) and/or along a direction (5) essentially parallel to the surface of the subsequent cushion element within the forming tool.

4. Method in accordance with one of the preceding claims, **characterised in that** the bonding material is a latex material and that a vulcanisation step is carried out after the cushion element has been formed.

5. Method in accordance with one of the preceding claims, **characterised in that** the foam particles (11) are flake-shaped and/or spherical-shaped foam particles (11) and are supplied with the bonding agent to the precursor material.

## Revendications

1. Procédé de fabrication d'un élément de rembourrage (2, 3) destiné à un véhicule à moteur, durant lequel les fibres (10) et les particules de mousse(11) sont liées au moyen d'un produit de liaison, **caractérisé par le fait que** pour réaliser un produit précurseur de l'élément de rembourrage (2, 3), les fibres (10) et les particules de mousse (11), indépendamment l'une de l'autre, doivent être rajoutées avec le produit de liaison au produit précurseur, l'emplacement des fibres (10) et/ou des particules de mousse (11) durant l'adjonction pour former le produit précurseur, étant influencé au moyen d'une charge électrostatique.

2. Procédé selon la revendication 1, **caractérisé par le fait que** les fibres (10) et les particules de mousse (11), ainsi que leur comportement en fonction de l'endroit, sont rajoutées au sein d'une forme de fabrication de l'élément de rembourrage (2, 3).

3. Procédé selon l'une des revendications précédentes, **caractérisé par le fait que** les fibres (10) et les particules de mousse (11), ainsi que leur comportement en fonction de l'endroit sont rajoutées dans le sens vertical (4) à la surface du futur élément de rembourrage (2, 3) et/ou en fonction de l'endroit, dans un sens parallèle (5) à la surface du futur élément de rembourrage (2, 3) au sein de l'outil de formage.

4. Procédé selon l'une des revendications précédentes, **caractérisé par le fait que** le produit de liaison est un matériau contenant du Latex et qu'une étape de vulcanisation a lieu après la mise en forme de l'élément de rembourrage.

5. Procédé selon l'une des revendications précédentes, **caractérisé par le fait que** des particules de mousse (11) en forme de flocons et/ou de billes (11) sont rajoutées avec le produit de liaison au produit précurseur.
